## Europäisches Patentamt

## European Patent Office

## Office européen des brevets

(19)

(11) Veröffentlichungsnummer: **0 189 550**
**B1**

(12)     # EUROPÄISCHE PATENTSCHRIFT

(45) Veröffentlichungstag der Patentschrift:
26.10.88

(21) Anmeldenummer: 85115130.8

(22) Anmeldetag: 28.11.85

(51) Int. Cl.⁴: **B 62 D 7/00**

(54) **Lenkung für Kraftfahrzeuge.**

(30) Priorität: 22.12.84 DE 3447042

(43) Veröffentlichungstag der Anmeldung:
06.08.86 Patentblatt 86/32

(45) Bekanntmachung des Hinweises auf die Patenterteilung:
26.10.88 Patentblatt 88/43

(84) Benannte Vertragsstaaten:
DE FR GB IT

(56) Entgegenhaltungen:
DE - A - 2 655 353
DE - C - 767 117
US - A - 2 757 028

(73) Patentinhaber: AUDI AG, Postfach 220,
D-8070 Ingolstadt (DE)

(72) Erfinder: Hollerweger, Heinz, Dipl.-Ing., Effnerstrasse 20,
D-8070 Ingolstadt (DE)
Erfinder: Kuipers, Geert, Dipl.-Ing., Am Kirchenweg 1a,
D-8070 Ingolstadt (DE)
Erfinder: Steiner, Peter, Ing. grad., Gaimersheimer
Strasse 65, D-8070 Ingolstadt (DE)
Erfinder: Zahl, Josef, Zuccallistrasse 1,
D-8070 Ingolstadt (DE)

(74) Vertreter: Le Vrang, Klaus, AUDI AG
Postfach 220 Patentabteilung I/EQP, D-8070 Ingolstadt
(DE)

## Beschreibung

Die Erfindung betrifft eine Lenkung für Kraftfahrzeuge gemäss dem Oberbegriff des Patentanspruches 1.

Eine derartige Lenkung ist der DE-PS 767 117 entnehmbar. Bei der dort gezeigten Zahnstangenlenkung sind die Spurstangen jeweils stirnseitig an der Zahnstange als bewegliches Stellteil angelenkt. Zwischen einer jeden Spurstange und der Zahnstange sind auf Druck belastete, elastische Mittel bzw. Gummipuffer vorgesehen. Um trotz der Zwischenschaltung der elastischen Mittel eine relativ starre Verbindung zwischen den beiden Spurstangen aufrechtzuerhalten, verläuft durch die Zahnstange eine lose geführte Stange, an welcher Gelenkteile der korrespondierenden Spurstangengelenke befestigt sind.

Durch die beschriebene Ausführung werden von den Vorderrädern kommende Stösse gedämpft, ohne dass dabei die parallele Führung der Vorderräder verschlechtert wird. Da über diese dazwischengeschalteten Gummipuffer jedoch auch die erforderlichen Lenkkräfte beim Lenken übertragen werden müssen, sind diese zur Vermeidung eines übermässigen Lenkungsspieles relativ steif auszubilden. Dies führt jedoch dazu, dass die von der Fahrbahn oder von der Brennkraftmaschine erzeugten Körperschallschwingungen bzw. hochfrequenten Schwingungen geringer Amplitude von den Rädern und gegebenenfalls von Antriebswellen über die Spurstangen auf das Lenkgetriebe und von diesem über die Lenksäule ins Fahrzeuginnere übertragen werden. Desgleichen bildet die in der Zahnstange lose geführte Stange eine erhebliche Körperschallbrücke.

Durch den Gegenstand der DE-A 26 55 353 und der US-A 27 57 028 ist es ferner bekannt, in eine Spurstange bzw. anschliessend an ein Spurstangengelenk, elastische Mittel einzuschalten, die hochfrequente Körperschallschwingungen isolieren sollen. Dabei ist ein ringförmiger Gummikörper zwischen dem Gelenkhäuse einerseits und einer Spurstangen-Innenhülse andererseits eingespannt. Der Gummikörper ist insbesondere auf Schub beansprucht und überträgt im Bereich eines definierten Leerweges nur geringe Lenkmomente. Bei höheren Lenkmomenten kommt er an Ausschlagsbegrenzern zur Anlage. Dadurch kann zwar eine hervorragende Körperschallisolierung bewirkt werden, jedoch wird die Steifigkeit des Lenkgestänges nachteilig vermindert. Da bei einem Kraftfahrzeug zumindest zwei Spurstangen vorgesehen sind, summiert sich der Leerweg entsprechend. Dies führt zu Eigenlenkbewegungen der Räder und gegebenenfalls zu einem Lenkungsflattern.

Aufgabe der Erfindung ist es, die gattungsmässe Lenkung derart zu verbessern, dass mit geringem Aufwand die Übertragung hochfrequenter Körperschallschwingungen eliminiert ist, ohne jedoch die Steifigkeit des Lenkgestänges zu vermindern.

Diese Aufgabe wird erfindungsgemäss mit den kennzeichnenden Merkmalen des Patentanspruches 1 gelöst. Es werden somit innerhalb des beweglichen Stellteiles des Lenkgetriebes hochelastische Mittel vorgeschlagen, welche jedoch nur mit einem definierten Leerweg – entsprechend Patentanspruch 2 inzwischen 50–500 µm – wirksam sind und dann durch kraftübertragende Ausschlagsbegrenzer eliminiert sind. Metallische Körperschallverbindungen sind ausgeschaltet. Durch den erfindungsgemässen Vorschlag bleibt vorteilhaft die Übertragungssteifigkeit der Spurstangen voll erhalten, so dass Eigenlenkbewegungen zwischen den Rädern und Lenkungsflattern ausgeschlossen sind.

Das bewegliche Stellteil kann entsprechend den Merkmalen der Patentansprüche 3 und 4 bei einem Schrauben- oder Schnecken-Lenkgetriebe der unmittelbar angetriebene Lenkstockhebel sein, an dem in bekannter Weise die Spurstangen angelenkt sind. Die elastischen Mittel können in einfacher Weise ein Drehschublager sein.

Bei einem Zahnstangen-Lenkgetriebe ist das bewegliche Stellteil durch eine Zahnstange als Stellglied, ein an der Zahnstange befestigtes Adapterteil und ein die beiden Spurstangen tragendes Aufnahmeteil gebildet. Die elastischen Mittel sind zwischen dem Adapterteil und dem Aufnahmeteil vorgesehen, so dass diese separat von der Zahnstange gefertigt und gegebenenfalls montiert werden können. Als elastisches Mittel kann besonders zweckmässig ein ringförmiges Gummilager mit radialen Bunden verwendet werden. Besonders montagegünstig kann das Aufnahmeteil durch eine Gewindehülse gebildet sein, in welche Gelenkteile der korrespondierenden Spurstangengelenke eingeschraubt sind. Gegebenenfalls können über diese Schraubverbindungen auch die Spurwerte des Kraftfahrzeuges eingestellt werden.

Zwei Ausführungsbeispiele der Erfindung sind im folgenden mit weiteren Einzelheiten näher erläutert. Die schematische Zeichnung zeigt in

Fig. 1 eine erfindungsgemässe Lenkung mit einem Zahnstangen-Lenkgetriebe;

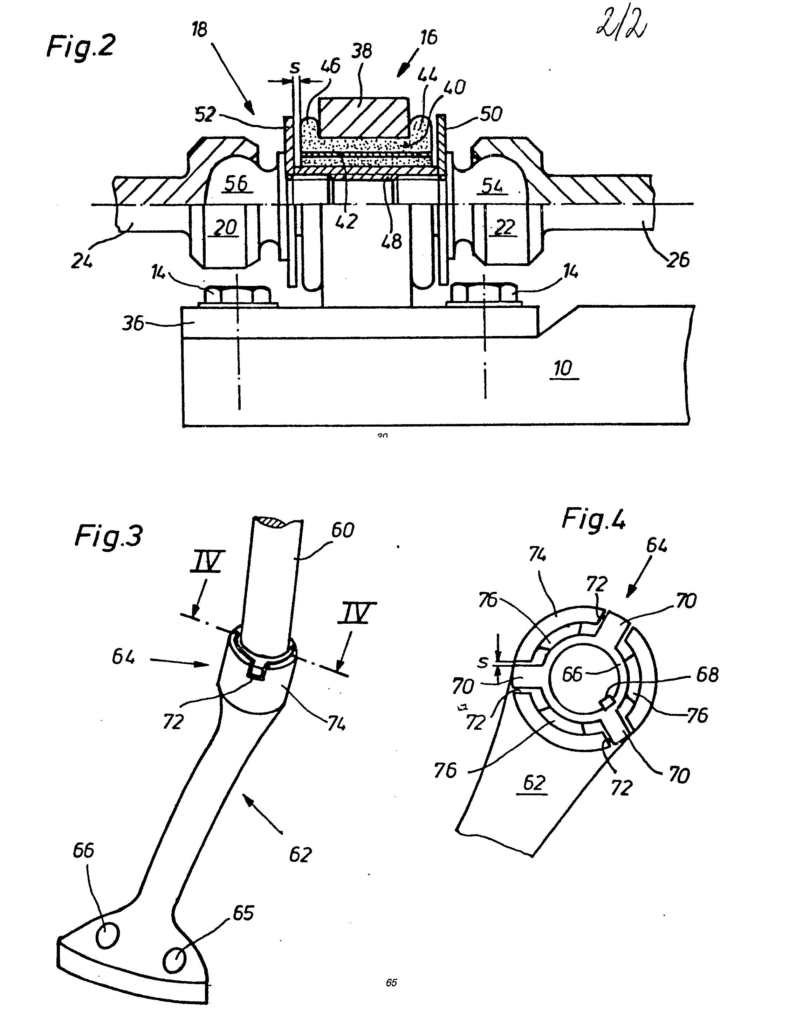

Fig. 2 das Aufnahme- und Adapterteil gemäss Fig. 1 in vergrösserter Darstellung, teilweise geschnitten;

Fig. 3 einen erfindungsgemässen Lenkstockhebel mit Antriebswelle einer nicht dargestellten Kugelumlauf-Lenkung und

Fig. 4 einen Schnitt entlang der Linie IV–IV der Fig. 3.

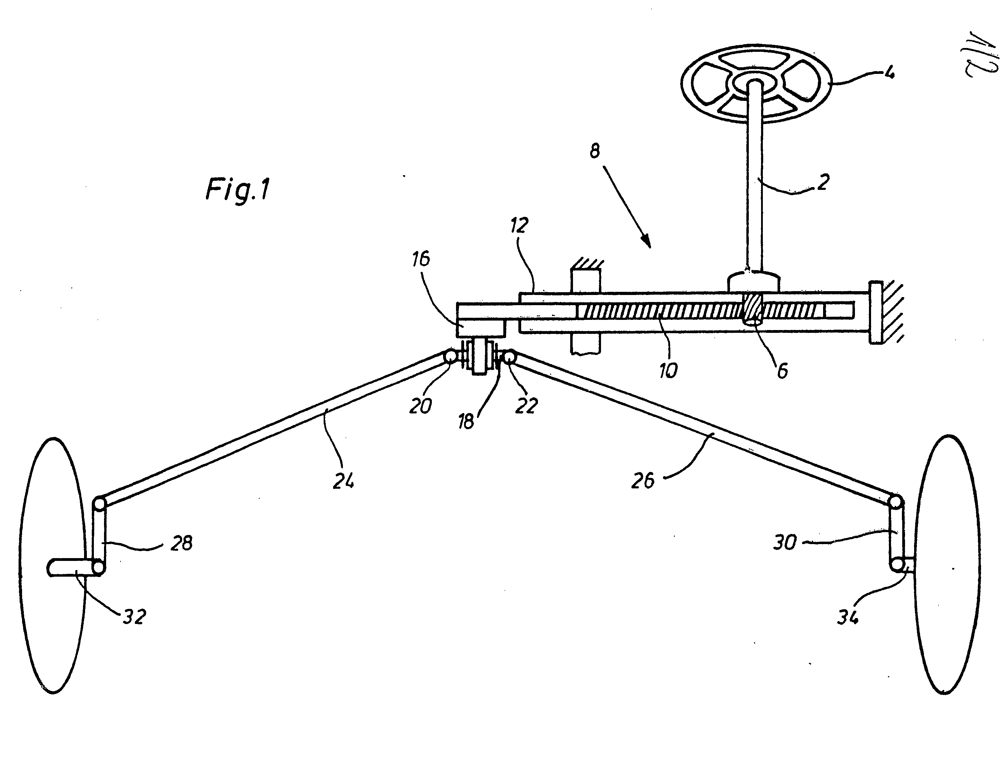

Die Fig. 1 zeigt eine Lenkung eines Kraftfahrzeuges mit einem an einer Lenksäule 2 befestigten Lenkhandrad 4, über welches ein nicht näher dargestelltes Zahnritzel 6 eines Zahnstangen-Lenkgetriebes 8 angetrieben wird.

Das Antriebsritzel 6 ist mit einer Zahnstange 10 in Eingriff, welche Zahnstange 10 in dem Zahnstangengehäuse 12 axial verschiebbar geführt ist. Das Zahnstangengehäuse 12 sowie die Lenksäule 2 sind in nicht näher dargestellter Weise am Aufbau des Kraftfahrzeuges entsprechend befestigt.

An dem aus dem Zahnstangengehäuse 12 herausragenden Ende der Zahnstange 10 ist mittels mehrerer Schrauben 14 ein Adapterteil 16 befestigt. Das Adapterteil 16 wiederum trägt in nachstehend beschriebener Weise ein Aufnahmeteil 18, an dem über Spurstangengelenke 20, 22 die Spurstangen 24, 26 angelenkt sind. Die Spurstangen 24, 26 sind anderen Endes an Lenkspurhebeln 28, 30 angelenkt, welche Lenkspurhebel an die Vorderräder des Kraftfahrzeuges tragenden, schwenkbaren Radträgern 32, 34 befestigt sind.

Das Adapterteil 16 besteht aus einer Flanschplatte 36, an welcher eine Lagerbüchse 38 angeformt ist.

In die Lagerbüchse 38 ist ein ringförmiges Gummilager 40 mit einer in Axialrichtung versteifend wirkenden Metallhülse 42 eingesetzt, welches radiale Bunde 44, 46 aufweist. Die radialen Bunde 44, 46 liegen an den radialen Ringflächen der Lagerbüchse 38 an.

Das die Spurstangen tragende Aufnahmeteil 18 ist durch eine Gewindehülse 48 gebildet, in welche unter Zwischenschaltung von Anschlagscheiben 50, 52 die Kugelbolzen 54, 56 der Spurstangengelenke 20, 22 fest eingeschraubt sind. Die mit den radialen Bunden 44, 46 des Gummilagers 40 korrespondierenden Ringflächen der Lagerbüchse 38 bzw. die Ringflächen der Anschlagscheiben 50, 52 bilden einen Ausschlagsbegrenzer der Spurstangen 24, 26, wobei jedoch im unbelasteten Zustand zwischen den Anschlagscheiben 50, 52 und den radialen Bunden 44, 46 ein definiertes Leerspiel (s) von ca. 50µ vorliegt.

Innerhalb dieses Leerweges (s) wird das Gummilager nur auf Schub in etwa in Axialrichtung der Spurstangen 24, 26 belastet, so dass es in diesem Bereich hochelastisch ist. Wird ein Lenkmoment übertragen so gerät abhängig von der Lenkrichtung die Anschlagscheibe 50 oder 52 an deren benachbartem radialen Bund 44 oder 46 in Anlage, so dass nunmehr hohe Lenkmomente übertragbar sind.

In der Fig. 3 ist als bewegliches Stellteil eine Antriebswelle 60 mit einem daran befestigten Lenkstockhebel 62 eines nicht näher dargestellten Kugelumlauf-Lenkgetriebes dargestellt.

An den Lenkstockhebel 62 können über die Bohrungen 65, 66 in bekannter Weise die Spurstangen zu den Vorderrädern des Kraftfahrzeuges eingeschlossen werden.

Der Lenkstockhebel 62 ist mit der Antriebswelle 60 über ein Drehschublager 64 mit Ausschlagsbegrenzern verbunden.

Das Drehschublager 64 besteht aus einer Innenhülse 66, welche mittels einer eingelegten Feder 68 unverdrehbar auf der Antriebswelle 60 aufgeschoben und durch eine nicht dargestellte Schraubenmutter befestigt ist. Die Innenhülse ist mit drei radial nach aussen abstehenden Ausschlagsbegrenzern 70 versehen, welche in entsprechende Nuten 72 des hülsenförmigen Befestigungsauges 74 des Lenkstockhebels 62 einragen. Dabei ist jeweils zwischen den Nuten 72 und den Ausschlagsbegrenzern 70 ein Verdreh-Leerweg (s) von ca. 250µ vorgesehen. Zwischen der Innenhülse 66 und dem Befestigungsauge 74 sind mehrere, umfangsmässig verteilte gummielastische Lagerelemente 76 vorgesehen, die eine elastische, im unbelasteten Zustand körperschallfreie Verbindung zwischen dem Befestigungsauge 74 des Lenkstockhebels 62 und der in der Innenhülse 66 aufgenommenen Antriebswelle 60 ergeben. Die Lagersegmente 76 werden dabei bei entsprechender Relativverdrehung auf Schub beansprucht.

Dementsprechend werden hochfrequente Körperschallschwingungen geringer Amplitude innerhalb des Leerweges (s) isoliert, so dass keine Übertragung auf die Antriebswelle 60 erfolgen kann. Beim Aufbringen eines grösseren Lenkmomentes legen sich die Flanken der Ausschlagsbegrenzer 70 an den korrespondierenden Wänden der Nuten 72 an, so dass eine direkte Übertragung des Lenkmomentes erfolgt.

Anstelle der Schubbelastung der elastischen Mittel kann gegebenenfalls durch konstruktive Zwänge auch eine Druckbelastung hingenommen werden, wenn die erforderliche Elastizität durch vorzusehende, materialschwächende Ausnehmungen in den elastischen Mitteln sichergestellt ist.

## Patentansprüche

1. Lenkung für Kraftfahrzeuge, bei der die mit den Lenkspurhebeln der Räder verbundenen Spurstangen andererseits mit dem beweglichen Stellteil eines Lenkgetriebes verbunden sind, wobei das Stellteil mit einem beide Spurstangen tragenden Aufnahmeteil und mit einem Stellglied gebildet ist und zwischen Aufnahmeteil und Stellglied gummielastische Mittel vorgesehen sind, dadurch gekennzeichnet, dass

a) die elastischen Mittel (Gummilager 40) durch Beanspruchung auf Schub und/oder durch Materialausnehmungen nur geringe Lenkmomente übertragen,

b) die elastischen Mittel bzw. das Aufnahmeteil (18) zwischen Ausschlagsbegrenzern (radiale Bunde 44, 46, Anschlagscheiben 50, 52) des Stellgliedes aufgenommen sind,

c) zwischen Aufnahmeteil und Ausschlagsbegrenzern ein definierter Leerweg (s) vorgesehen ist und

d) zwischen dem Aufnahmeteil (18) und dem Stellglied (Adapterteil 16, Zahnstange 10) keine Körperschallverbindung besteht.

2. Lenkung nach Anspruch 1, dadurch gekennzeichnet, dass der Leerweg (s) des Aufnahmeteiles (18, 62) zwischen 50µ bis 500µ beträgt.

3. Lenkung nach den Ansprüchen 1 und 2, dadurch gekennzeichnet, dass das Lenkgetriebe ein Schnecken- oder Schrauben-Lenkgetriebe (Kugelumlauflenkung, Schneckenrollenlenkung, Schraubenlenkung etc.) mit einem Lenkstockhebel (62) und einer Antriebswelle (60) als beweglichem Stellteil ist.

4. Lenkung nach Anspruch 3, dadurch gekennzeichnet, dass die elastischen Mittel durch ein Drehschublager (64) zwischen der Antriebswelle (60) und dem Lenkstockhebel (62) ist.

5. Lenkung nach den Ansprüchen 1 und 2, dadurch gekennzeichnet, dass das Lenkgetriebe ein Zahnstangen-Lenkgetriebe mit einer Zahnstange als beweglichem Stellteil ist.

6. Lenkung nach den vorhergehenden Ansprüchen, dadurch gekennzeichnet, dass an dem beweglichen Stellteil ein Adapterteil (16) befestigt ist, welches die elastischen Mittel mit Ausschlagsbegrenzern und das Aufnahmeteil (18) aufnimmt.

7. Lenkung nach Anspruch 6, dadurch gekennzeichnet, dass die elastischen Mittel durch ein ringförmiges Gummilager (40) gebildet sind, welches Gummilager in einer Lagerbüchse (38) des Adapterteiles (16) aufgenommen und von dem Aufnahmeteil (Gewindehülse 48) durchsetzt ist.

8. Lenkung nach Anspruch 7, dadurch gekennzeichnet, dass das Aufnahmeteil (18) durch eine Gewindehülse (48) gebildet ist, in welche Gelenkteile (Kugelbolzen 54, 56) der korrespondierenden Spurstangengelenke (20, 22) eingeschraubt sind.

9. Lenkung nach den Ansprüchen 6 bis 8, dadurch gekennzeichnet, dass die Ausschlagsbegrenzer durch radial nach aussen abragende Bunde (44, 46) des Gummilagers (40) gebildet sind, welche zwischen der Lagerbüchse (38) des Adapterteiles (16) und am Aufnahmeteil (18) festgelegten Anschlagscheiben (50, 52) angeordnet sind und welche bei Übertragung eines Lenkmomentes auf Druck belastet sind.

## Revendications

1. Direction pour véhicules automobiles, dans laquelle les barres d'accouplement, reliées au levier de direction des roues, sont reliées de l'autre côté à la partie de commande mobile d'un mécanisme de direction, la partie de commande étant réalisée avec une pièce de réception qui porte les deux barres d'accouplement et avec un organe de commande et des moyens élastiques en caoutchouc étant prévus entre la pièce de réception et l'organe de commande, caractérisée en ce que

a) les moyens élastiques (coussinet en caoutchouc 40) ne transmettent que de faibles couples de direction par sollicitation au cisaillement et/ou par des enlèvements de matière,

b) les moyens élastiques ou la pièce de réception (18) sont logés entre des limiteurs de braquage (collets radiaux 44, 46, disques de butée 50, 52) de l'organe de commande.

c) une course à vide définie (s) est prévue entre la pièce de réception (18) et les limiteurs de braquage, et

d) il n'existe pas de liaison de conduction du bruit dans les solides entre la pièce de réception (18) et l'organe de commande (pièce adaptatrice 16, crémaillère 10).

2. Direction selon la revendication 1, caractérisée en ce que la course à vide (s) de la pièce de réception (18, 62) est comprise entre 50μm et 500μm.

3. Direction selon la revendication 1 ou 2, caractérisée en ce que le mécanisme de direction est un mécanisme de direction par vis sans fin et secteur ou par écrou et vis (direction à recirculation de billes, direction à vis et rouleau, direction par écrou et vis, etc.), avec un levier de direction (62) et un arbre d'entraînement (60) en tant que partie de commande mobile.

4. Direction selon la revendication 3, caractérisée en ce que les moyens élastiques sont constitués par un coussinet de pivotement-cisaillement (64) entre l'arbre d'entraînement (60) et le levier de direction (62).

5. Direction selon la revendication 1 ou 2, caractérisée en ce que le mécanisme de direction est un mécanisme de direction à crémaillère, avec une crémaillère servant de partie de commande mobile.

6. Direction selon l'une quelconque des revendications 1 à 5, caractérisée en ce qu'il est fixé, à la partie de commande mobile, une pièce adaptatrice (16) qui reçoit les moyens élastiques avec des limiteurs de braquage et la pièce de réception (18).

7. Direction selon la revendication 6, caractérisée en ce que les moyens élastiques sont constitués par un coussinet annulaire en caoutchouc (40) qui est reçu dans une douille de coussinet (38) de la pièce adaptatrice (16) et qui est traversé par la pièce adaptatrice (douille filetée 48).

8. Direction selon la revendication 7, caractérisée en ce que la pièce de réception (18) est constituée par une douille filetée (48) dans laquelle sont vissées les parties articulées (boulons à rotule 54, 56) des joints de barre d'accouplement (20, 22) correspondants.

9. Direction selon l'une quelconque des revendications 6 à 8, caractérisée en ce que les limiteurs de braquage sont constitués par des collets (44, 46) du coussinet en caoutchouc (40) qui font saillie radialement vers l'extérieur, collets qui sont disposés entre la douille de coussinet (38) de la pièce adaptatrice (16) et des disques de butée (50, 52) fixes à la pièce de réception (18) et qui sont sollicités à la compression lors de la transmission d'un couple de direction.

## Claims

1. Steering system for motor vehicles, in which the track rods connected to the wheels by the track link steering arms are connected at the other ends with the moving operating element of a steering mechanism, the operating element being formed by a locating piece carrying both track rods and by a final control element and rubberelastic devices being provided between the locating device and the final control element, characterized in that

a) due to stressing in shear and/or due to recesses in the material the elastic rubber devices (rubber bushing 40) only transmit small steering moments,

b) the elastic devices or the locating piece (18) are located between deflection limiters (radial shoulders 44, 46, stop discs 50, 52) of the final control element,

c) a defined free play (s) is provided between the locating piece and the deflection limiters,

d) there is no structure-borne noise connection between the locating piece (18) and the final control element (adapter piece 16, rack 10).

2. Steering system according to Claim 1, characterized in that the free play (s) of the locating piece (18, 62) is between 50μ and 500μ.

3. Steering system according Claims 1 and 2, characterized in that steering mechanism is a worm and sector steering mechanism or a screw-and-nut steering mechanism (recirculating ball steering system, cam and roller steering system, screw-and-nut steering system, etc.) with a steering-gear arm (62) and a driving shaft (60) as the moving operating element.

4. Steering system according to Claim 3, characterized in that the elastic devices by a turn- slide cylindrical bearing (64) between the drive shaft (60) and the steering-gear arm (62).

5. Steering system according to Claims 1 and 2, characterized in that the steering mechanism is a rack and pinion steering mechanism with a rack as the moving operating element.

6. Steering system according to one of the preceding Claims, characterized in that an adapter piece (16) is mounted on the moving operating element and locates the elastic devices with deflection limiters and the locating piece (18).

7. Steering system according to Claim 6, characterized in that the elastic devices are formed by an annular rubber bushing (40), the said rubber bushing being located in a bush (38) of the adapter piece (16) with the locating piece (threaded sleeve 48) passing through it.

8. Steering system according to Claim 7, characterized in that the locating piece (18) is formed by a threaded sleeve (48) into which are screwed parts of the joints (ball pins 54, 56) of the corresponding track rod joints (20, 22).

9. Steering system according to Claims 6 to 8, characterized in that the deflection limiters are formed by radially outward projecting shoulders (44, 46) of the rubber bushing (40) which are positioned between the bush (38) of the adapter piece (16) and the stop discs (50, 52) secured at the locating piece (18) and which are compressed when transmitting a steering moment.

Fig.1

0 189 550

Fig.2

Fig.3

Fig.4